(19) Europäisches Patentamt
European Patent Office
Office européen des brevets

(11) **EP 1 983 098 B1**

(12) **EUROPEAN PATENT SPECIFICATION**

(45) Date of publication and mention
of the grant of the patent:
**27.02.2013   Bulletin 2013/09**

(51) Int Cl.:
***D07B 1/06*** *(2006.01)*       ***B60C 9/00*** *(2006.01)*
***D07B 1/16*** *(2006.01)*

(21) Application number: **07707117.3**

(22) Date of filing: **19.01.2007**

(86) International application number:
**PCT/JP2007/050829**

(87) International publication number:
**WO 2007/083761 (26.07.2007 Gazette 2007/30)**

(54) **RUBBER-STEEL CORD COMPOSITE AND TIRE USING THE SAME**

GUMMI-/STAHLKORDVERBUND UND DAVON GEBRAUCH MACHENDER REIFEN

CORDON COMPOSITE CAOUTCHOUC-ACIER ET PNEU L UTILISANT

(84) Designated Contracting States:
**DE ES FR GB IT**

(30) Priority:   **20.01.2006   JP 2006012605
20.01.2006   JP 2006012624
01.05.2006   JP 2006127401
09.05.2006   JP 2006129916**

(43) Date of publication of application:
**22.10.2008   Bulletin 2008/43**

(73) Proprietor: **Bridgestone Corporation
Tokyo 104-0031 (JP)**

(72) Inventors:
• **ISHIZAKA, Hiroki
Kodaira-shi, Tokyo 1870031 (JP)**

• **IKEHARA, Kiyoshi
Kodaira-shi, Tokyo 1870031 (JP)**

(74) Representative: **Waldren, Robin Michael et al
Marks & Clerk LLP
90 Long Acre
London
WC2E 9RA (GB)**

(56) References cited:
EP-A2- 1 095 793        DE-A1- 4 234 562
JP-A- 10 292 277        JP-A- 10 298 880
JP-A- 2000 096 464      JP-A- 2001 130 214
US-A- 3 273 978         US-A1- 2003 047 265

**Description**

Technical Field

The present invention relates to a rubber-steel cord composite, and more particularly relates to a rubber-steel cord composite suitably applied to various rubber products, such as a tire, for reinforcement.

In addition, the present invention relates to a motorcycle pneumatic radial tire (hereinafter referred to as a "motorcycle tire" in some cases) used for a high performance motorcycle, so-called a super sport type motorcycle, which is designed for high-speed cornering, and more particularly relates to a low-profile pneumatic radial tire for a high performance motorcycle, which improves steering stability during high-speed cornering while various performances, such as high-speed durability and straight running stability, are maintained.

Furthermore, the present invention relates to a large pneumatic radial tire (hereinafter referred to as a "large tire" in some cases), and more particularly relates to a large radial tire having an improved anti-cutting performance, which is suitable for running on a bad road, such as on a waste land.

Background Art

When a rubber-steel cord composite in which rubber is reinforced by at least one steel cord is applied to a rubber product, insufficient strength and rigidity of rubber itself can be increased; hence, the rubber-steel cord composite has been widely used for various rubber products, such as a tire, a belt, and a hose.

In recent years, in order to further improve the performance of a rubber product, the rubber-steel cord composite is required to have various and precise physical properties so as to be optimum for the function of a portion to which the above composite is to be applied. For example, for a product such as a tire, in order to improve contact conditions with a road surface at the initial stage, the flexibility is required; however, on the other hand, when an input force is further applied during cornering or the like, high rigidity is required. When there is provided a rubber-steel cord composite which improves a fitting performance and a robust performance of a product in a low-load region since the flexibility of rubber is obtained, and which improves the strength and the rigidity of the product at a high load since the properties of steel can be obtained, the above composite is effectively used.

However, even when the ratio of the steel cord used as a reinforcing member is changed, the above two types of properties cannot be simultaneously improved. In the cause of a steel cord itself, when filaments (element wires) which form the cord are subjected to a large shape forming, a steel cord can be obtained having physical properties in which low rigidity is realized in a low load region, and in which high rigidity is realized when a predetermined load or more is applied (so-called open cord). The reasons for this are that by the open cord structure as described above, since spaces are present between the filaments, when a tensile force is applied to the cord, in a region in which the spaces are present at a low load, the filaments are each deformed as a spring to show low rigidity, and that on the other hand, after the filaments are brought into contact with each other when a predetermined load or more is applied thereto, properties similar to the rigidity of steel are obtained.

As a technique relating to an improvement of the steel cord, for example, in Patent Document 1, in order to provide a cord having anisotropy of flexural rigidity in which without decreasing in-plane flexural rigidity of a tire belt, out-of-plane flexural rigidity thereof can be decreased, a technique has been disclosed in which a steel cord for rubber product reinforcement is formed by laminating at least two filaments subjected to shape forming which forms a wave shape on one planar surface.

In addition, when a so-called spiral belt layer is applied to a motorcycle pneumatic radial tire, the spiral belt layer being formed by spirally winding a belt member including one cord or at least two parallel cords embedded in coating rubber in a tire rotation axis direction at an angle toward approximately a tire circumferential direction, the high-speed durability, straight running stability, uniformity performance, acceleration performance, and the like can be improved; however, on the other hand, reaction becomes slow when the direction of a vehicle is changed, so that the nimble performance is degraded.

Through investigation on the mechanism in which the above two types of properties cannot be simultaneously obtained, it was found that although the rigidity can be increased by providing a spiral belt layer, the degree of contact conditions with a road surface is degraded thereby, and the ground contact response of a tire becomes inferior, so that the nimble performance is lost.

That is, a rubber product, such as a tire, is required to have flexibility at the initial stage in order to improve the contact conditions with a road surface, and is also required to have high rigidity during cornering or the like at which an input force is further applied. Hence, it is believed that in order to overcome the above problem, a spiral belt layer is effectively applied to a tire, which can improve the fitting performance and the robust performance of the product in a low load region since the flexible property of rubber can be obtained, and which can improve the strength and the rigidity of the product at a high load since the properties of steel can be obtained.

In order to realize the spiral belt layer as described above, when filaments (element wires) which form a cord are subjected to large shape forming, a steel cord itself can be obtained which is used as a reinforcing member of the spiral belt layer and which has physical properties in which low rigidity is realized in a low load region, and in which high rigidity is realized at a predetermined load or more (so-called open cord).

As a technique relating to an improvement of a steel cord used as a reinforcing member of the spiral belt layer described above, for example, in Patent Document 2, a motorcycle radial tire has been disclosed in which by controlling the tensile elongation of a belt cord formed of at least one spirally wound steel cord in a predetermined range, without seriously degrading the straight running performance and turning performance during high-speed running, the wear resistance is improved while the handling performance is maintained. In addition, in Patent Document 3, a motorcycle radial tire has been disclosed which is defined by a load-elongation curve of a band cord forming a spirally wound belt-shaped ply, and in Patent Document 4, a motorcycle pneumatic radial tire has been disclosed which uses a belt cord having a predetermined breaking elongation and a single twisted structure in which a plurality of steel filaments having a predetermined tensile strength are twisted together.

Furthermore, a general dump truck tire that may run on a waste land in some cases is forced to run on a road surface on which crushed rocks are spread. Accordingly, a belt-cut failure is liable to occur, and a tire failure may be directly caused thereby, or a steel cord may be corroded by water permeated from a cut position to cause a separation failure; hence, one of the above failures occurs, and the tire life is disadvantageously decreased.

As measures against the cut failure problem as described above, a steel cord of a multi-twisted structure having a relatively large breaking elongation, such as a $4 \times 4$ structure, has been used for an outermost layer of the belt. In addition, for example, in Patent Document 5, in order to improve the durability of a belt cord so as to increase driving life of a tire, a pneumatic radial tire for bad-road running has been disclosed in which as a cord of an outermost layer of the belt, a cord of an $n \times m$ multi-twisted structure having a breaking elongation of 5 to 8% is used, the filament diameter is in the range of 0.30 to 0.44 mm, and a rubber permeation rate in the strand is in the range of 50 to 85%.

Patent Document 1: Japanese Unexamined Patent Application Publication No. 9-13288 (Claims etc)
Patent Document 2: Japanese Unexamined Patent Application Publication No. 4-362402 (Claims etc)
Patent Document 3: Japanese Unexamined Patent Application Publication No. 2001-130218 (Claims etc)
Patent Document 4: Japanese Unexamined Patent Application Publication No. 2002-19413 (Claims etc)
Patent Document 5: Japanese Unexamined Patent Application Publication No. 9-226318 (Claims etc)
JP 200006464 discloses a cord according to the preamble of claim 1.
JP 2001-1130214 also discloses a pneumatic radial tire having a metal cord of a specific shape.

Disclosure of Invention

Problems to be solved by the Invention

However, in the above open cord structure, when a steel cord is embedded in rubber, followed by vulcanization thereof, since the volume elasticity modulus of the rubber is high, rubber enclosed inside the cord shows incompressive properties, and a filament cannot deform in a spring-like manner; hence, the shape forming effect cannot be obtained, and the rigidity is high from the initial stage. Accordingly, by the cord embedded in rubber, it has been difficult to obtain nonlinear properties as that of a steel cord alone. In addition, a technique has also been disclosed in which an entire steel cord is subjected to wave shape forming so as to obtain rigidity after elongation at the initial stage; however, by the method described above, strain is concentrated on mountain and valley portions of the wave shape when a load is applied, and as a result, a fatigue performance is degraded.

Accordingly, an object of the present invention is to provide a rubber-steel cord composite which shows nonlinear physical properties even in a rubber which is characterized by incompressive properties after vulcanization and hence which can show low rigidity and flexible properties in a low-strain region and, on the other hand, can show high rigidity in a high-strain region.

In addition, another object of the present invention is to provide a motorcycle pneumatic radial tire having improved turning steering performance (cornering performance) without degrading various performances, such as straight running performance, high-speed performance, comfort, and uniformity, the motorcycle pneumatic radial tire including a spiral belt layer which is realized by using a cord having a structure in which rubber is not enclosed inside as a belt reinforcing member so that low rigidity and flexible properties are obtained in a low-strain region and on the other hand, high rigidity is obtained in a high-strain region.

Furthermore, a steel cord having a multi-twisted structure, which is conventionally used for a large pneumatic tire, has disadvantages, such as low productivity and high cost. In addition, in a cord having a multi-twisted structure, since rubber does not sufficiently permeate the inside of the cord, separation is disadvantageously liable to occur when the tire is damaged by cutting.

Accordingly, still another object of the present invention is to provide a large pneumatic radial tire which can improve tire durability by overcoming the above problem to improve an anti-cutting performance against external scratches,

Means for Solving the Problems

Through intensive research carried out by the inventors of the present invention, it was found that a rubber-steel cord composite can be obtained which can show flexibility in a low-strain region and high rigidity at a high-strain region, the rubber-steel cord composite being formed such that a plurality of steel linear objects subjected to spiral shape forming is bundled without being twisted to form at least one steel cord, followed by embedding the steel cord in rubber, so that the rubber is not enclosed inside the cord; as a result, the present invention was made.

That is, a rubber-steel cord composite of the present invention comprises: at least one steel cord provided by bundling a plurality of steel linear objects subjected to spiral shape forming at substantially identical pitches in an approximately identical phase without twisting, the steel cord being embedded in rubber, the steel linear objects being in contact with each other, and a circumscribed circle of a formed spiral shape of any one of the steel linear objects and a circumscribed circle of a formed spiral shape of at least one of the other steel linear objects are overlapped with each other. In addition, preferably, the structures and the shape forming amounts of the steel linear objects are all identical to each other, and wherein the following equation is satisfied,

$$D > 2.5d$$

where D indicates the diameter of a circumscribed circle of the formed spiral shape of the steel linear objects, and d indicates the outer diameter of the steel linear objects.

According to the present invention, the steel linear objects may include steel filaments each having an approximately circular cross-section or steel strands provided by twisting steel filaments.

In addition, in strain-load characteristics in the state in which the rubber adheres the inside of a circumscribed circle of the steel cord, the elongation amount obtained by changing an application load W from 1,500xS (N) to 1,600xS (N) is preferably 0.070% or less, where S (mm$^2$) indicates a steel portion cross-sectional area of the steel cord, and an application load $W_1$ (N) at an elongation of 0.35% and an application load $W_2$ (N) at an elongation of 0.45% preferably satisfy the following equation.

$$W_2 - W_1 < k_1 \cdot S$$

where $K_1 = 35N/mm^2$

More preferably, in the strain-load characteristics in the state in which the rubber adheres the inside of a circumscribed circle of the steel cord, the elongation amount is 0.065% or less when the application load W is changed from 1,500xS(N) to 1,600xS(N). In addition, more preferably, in the strain-load characteristics in the state in which the rubber adheres the inside of a circumscribed circle of the steel cord, the application load $W_1$ (N) at an elongation of 0.35% and the application load $W_2$ (N) at an elongation of 0.45% satisfy the following equation.

$$W_2 - W_1 < k_2 \cdot S \quad ,$$

where $K_2 = 20N/mm^2$.

The rubber-steel cord composite of the present invention may be manufactured such that the steel linear objects wound around separate reels are bundled by being passed through one mouth ring to form the steel cord, and the steel cord is coated by rubber and is then embedded in a rubber composite, or may be manufactured such that the steel linear objects wound around separate reels are bundled by being passed through one slit to form the steel cord, and after rubber is pressure-bonded to the steel cord from the top and the bottom, the steel cord is then embedded in a rubber composite.

In addition, through intensive research by the inventors of the present invention, it was found that when at least one steel cord provided by bundling steel linear objects subjected to spiral shape forming without twisting is applied to a spiral belt layer of a motorcycle pneumatic radial tire, without enclosing rubber in the cord, flexibility can be obtained in a low-strain region, and high rigidity can be obtained in a high-strain region; hence, a motorcycle pneumatic radial tire of the present invention could be finally realized.

That is, the motorcycle pneumatic radial tire of the present invention comprises: a tread portion; a pair of sidewall portions provided from two edge portions of the tread portion to the inside in a tire radius direction; and bead portions ranging from the sidewall portions to the inside in the tire radius direction, in which a carcass layer, which reinforces these portions described above between bead cores embedded in the respective bead portions and which is formed of at least one carcass ply composed of rubber and cords coated thereby inclined by 60° to 90° with respect to the equatorial plane of the tire, and a spiral belt layer including at least one layer, which is provided outside the carcass layer in the tire radius direction and which is formed by spirally winding substantially parallel to the equatorial plane of the tire, are included, and

in the motorcycle pneumatic radial tire, the spiral belt layer comprises the above rubber-steel cord composite according to the present invention.

Furthermore, through further intensive research carried out by the inventors of the present invention, it was found that when at least one steel cord provided by bundling steel linear objects subjected to spiral shape forming without twisting is applied to a reinforcing cord of an outermost layer of the belt of a large pneumatic radial tire, the anti-cutting performance of the belt can be improved; as a result, the present invention was made.

That is, a pneumatic radial tire for a function bus of the present invention comprises: a carcass including at least one ply of a' rubber-coated radial array cord, which reinforces a pair of sidewall portions and a tread portion between bead cores embedded respectively in a pair of bead portions; and a belt including at least one layer which reinforces the tread portion along the outer circumference of the carcass, and in the large pneumatic radial tire, at least outermost layer of the belt comprises the rubber-steel cord composite according the present invention.

In the tire for a touch or bus of the present invention, the following equation is preferably satisfied,

$$P < 17.5D - 8.0$$

where P and D indicate the shape forming pitch and the diameter of a circumscribed circle of the formed spiral shape of the steel linear objects, respectively.

Advantages According to the present invention, by the structure described above, a rubber-steel cord composite can be realized in which low rigidity and flexible properties can be obtained in a low-strain region, and in which on the other hand, in a high-strain region, high rigidity can be obtained.

In addition, according to the present invention, by the structure described above, a spiral belt layer can be realized in which in a low-strain region, low rigidity and flexible deformability can be obtained, and in which on the other hand, in a high-strain region, high rigidity of steel can be obtained. As a result, without degrading various tire performances, such as straight running performance, high-speed performance, comfort, and uniformity, a motorcycle pneumatic radial tire having improved turning steering performance (cornering performance) can be obtained.

Furthermore, according to the present invention, since a reinforcing cord having the predetermined structure described above is applied to the outermost layer of the belt of a large pneumatic radial tire, a large pneumatic radial tire having improved durability can be realized by improving the anti-cutting performance against external scratches. In addition, the steel cord used in the present invention has superior productivity; hence, compared to a steel cord having a multi-twisted structure which has been generally used, a merit of low price can also be obtained.

Brief Description of Drawings

Fig. 1 is a cross-sectional view showing a cord portion of a rubber-steel cord composite according to one example of the present invention.

Fig. 2 is a cross-sectional view showing a cord portion of a rubber-steel cord composite according to comparative examples 1-1 and 2-1.

Fig. 3 is a cross-sectional view showing a cord portion of a rubber-steel cord composite according to comparative examples 1-2 and 2-2.

Fig. 4 is a cross-sectional view showing a cord portion of a rubber-steel cord composite according to comparative examples 1-3 and 2-3.

Fig. 5 is a cross-sectional view showing a cord portion of a rubber-steel cord composite according to comparative examples 1-4, 2-4, and 4-3.

Fig. 6 is a schematic cross-sectional view showing a motorcycle pneumatic radial tire according to one example of the present invention.

Fig. 7 is a schematic cross-sectional view showing a large pneumatic radial tire according to one example of the present invention.

Fig. 8 includes schematic cross-sectional views each showing one example of a cord structure of a rubber-steel cord composite according to the present invention.

Fig. 9 includes views illustrating another example of the cord structure of the rubber-steel cord composite according to the present invention.

Fig. 10 is a graph showing the relationship between the elongation and the tensile load of the rubber-steel cord composite according to the present invention.

Fig. 11 is a cross-sectional view showing another preferable example of a cord portion of the rubber-steel cord composite according to the present invention.

Fig. 12 is a cross-sectional view showing a cord portion of a rubber-steel cord composite according to a comparative example 4-1.

Fig. 13 is a cross-sectional view showing a cord portion of a rubber-steel cord composite according to a comparative example 4-2.

Reference Numerals

| 1, 2 | steel linear object |
|------|---------------------|
| 11, 33 | tread portion |
| 12, 32 | sidewall portion |
| 13, 31 | bead portion |
| 21, 41 | bead core |
| 22, 42 | carcass layer |
| 23 | spiral belt layer |
| 43a to 43d | belt |

Best Modes for Carrying Out the Invention

Hereinafter, preferable embodiments of the present invention will be described in detail.

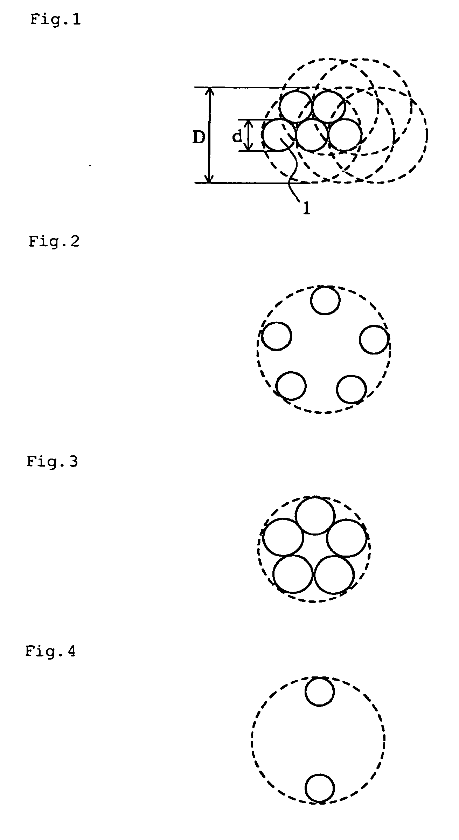

Fig. 1 is a schematic cross-sectional view showing a cord structure of a rubber-steel cord composite of the present invention. As shown in the figure, the rubber-steel cord composite of the present invention includes at least one steel cord embedded in rubber, the steel cord being provided by bundling a plurality of steel linear objects 1 subjected to spiral shape forming at substantially identical pitches in an approximately identical phase without twisting.

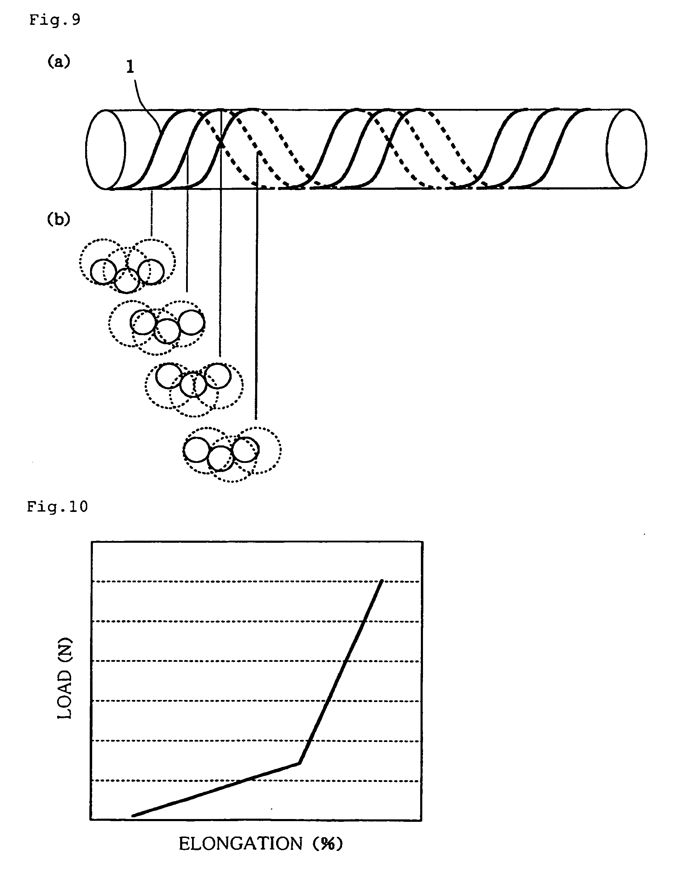

In general, when a tensile force is applied to a steel cord formed by twisting steel filaments or steel strands obtained by twisting steel filaments, which are subjected to excessive shape forming, at an initial low-strain stage in which spaces are present between the filaments or the strands, as shown in Fig. 10, low rigidity is obtained as that of a spring until the filaments or the strands are sufficiently twisted; however, on the other hand, by increasing a load to apply more strain, since the filaments or the strands are brought into contact with each other and the spaces therebetween are eliminated, the rigidity is rapidly increased. However, as described above, when the steel cord is embedded in rubber, followed by performing vulcanization thereof, since the volume change of the rubber inside the cord hardly occurs, twisting cannot be sufficiently performed even when the spaces are present, and high rigidity is shown even at the initial stage; as a result, physical properties in which the rigidity is rapidly changed at a certain point during the change in load, as those obtained when rubber is not present, are not shown.

Accordingly, in the present invention, as shown in the figure, since the steel linear objects 1 subjected to spiral shape forming are bundled in an approximately identical phase without being twisted, that is, since filaments or strands subjected to shape forming are not twisted, rubber is allowed to escape outside of the cord without being enclosed therein, and even after vulcanization, initial elongation similar to that of a shaped spring can be obtained as a cord which is not embedded in rubber. On the other hand, when filaments or strands subjected to shape forming are not twisted, even when the number thereof to be embedded is maximized, a reinforcing member density in a cross-section cannot be increased, and hence a sufficient strength cannot be obtained. Accordingly, in the present invention, since filaments or strands subjected to shape forming at substantially identical pitches are bundled in an identical phase, they do not interfere with each other although being in contact with each other; hence, the reinforcing member density can be increased, and as a result, the strength can be increased.

In addition, in the present invention, as shown in the figure, a circumscribed circle of the formed spiral shape of one optional steel linear object and that of at least one of the other steel linear objects are overlapped with each other. That is, when the steel linear objects forming a steel cord are disposed so that the circumscribed circles of the formed shapes are overlapped with each other, a high rigid strength can be obtained when a high load is applied.

Furthermore, in the present invention, the structures and the shape forming amounts of all the steel linear objects forming a steel cord are preferably made identical to each other; hence, the stress is uniformly applied to the individual steel linear objects, and strength efficiency can be improved.

In addition, in the present invention, in accordance with necessary strength and rigidity, the steel linear objects forming a steel cord may be steel filaments having an approximately circular cross-section or steel strands formed by twisting a plurality of steel filaments, or the above two may be used in combination.

In addition, in the present invention, the following equation is satisfied.

$$D > 2.5d$$

In this equation, the circumscribed circle diameter of the formed spiral shape and the outside diameter of the steel linear object 1 are represented by D and d, respectively (see Fig. 1). When the circumscribed circle diameter D of the formed spiral shape is set 2.5 times larger than the diameter d of the steel linear object 1, the difference between the rigidity at the initial stage and that of a high rigidity portion obtained at a predetermined input force or more is increased, and as a result, the features of the rubber-steel cord composite of the present invention can be significantly enhanced.

Furthermore, according to the rubber-steel cord composite of the present invention, in strain-load characteristics in the state in which the rubber adheres inside the circumscribed circle of the steel cord, the elongation amount obtained by applying a predetermined input force, that is, with respect to a steel portion cross-section S ($mm^2$) of the steel cord, by changing an application load W from $1,500 \times S$ (N) to $1,600 \times S$ (N), is preferably 0.070% or less and more preferably 0.065% or less in order to obtain high rigidity as the steel cord. In addition, as that described above, in the strain-load characteristics in the state in which the rubber adheres inside the circumscribed circle of the steel cord, the following equation is preferably satisfied,

$$W_2 - W_1 < K_1 \cdot S$$

where $W_1$(N) indicates an application load at an initial elongation of 0.35%, $W_2$(N) indicates an application load at an elongation of 0.45% and $K_1 = 35 N/mm^2$. When the difference in load, $W_2 - W_1$, is controlled to be less than $K_1 \cdot S$ or particularly less than $K_2 \cdot S$, where $K_2 = 20 N/mm^2$, the flexibility can be obtained at a low load application, and hence it is preferable since the features of the rubber-steel cord composite of the present invention are fully obtained and the performance of its product is improved. In this case, the steel portion cross-section S ($mm^2$) of the steel cord can be obtained by equation $S = \sum s_n$, where the number of steel filaments forming the steel cord is represented by n, and the cross-sectional areas of the steel filaments are represented by $s_1$, $s_2$, $\cdots s_n$ ($mm^2$).

As a method for efficiently and stably forming the rubber-steel cord composite of the present invention, for example, the following methods may be effectively used. That is, there may be mentioned a method in which after the above steel linear objects separately wound around reels are bundled together by being passed through one mouth ring to form a steel cord, this steel cord is coated by rubber and is then embedded in a rubber composite, and a method in which after the steel linear objects separately wound around reels are bundled together by being passed through one slit to form a steel cord, rubber is pressure-bonded to this steel cord from the top and the bottom, and this steel cord is embedded in a rubber composite.

In the rubber-steel cord composite of the present invention, when the conditions relating to the above cord structure are satisfied, other than those described above, that is, the particular cord structure, the number, wire diameter, and particular structure of the steel linear objects, materials for steel and rubber, and the like are not specifically limited.

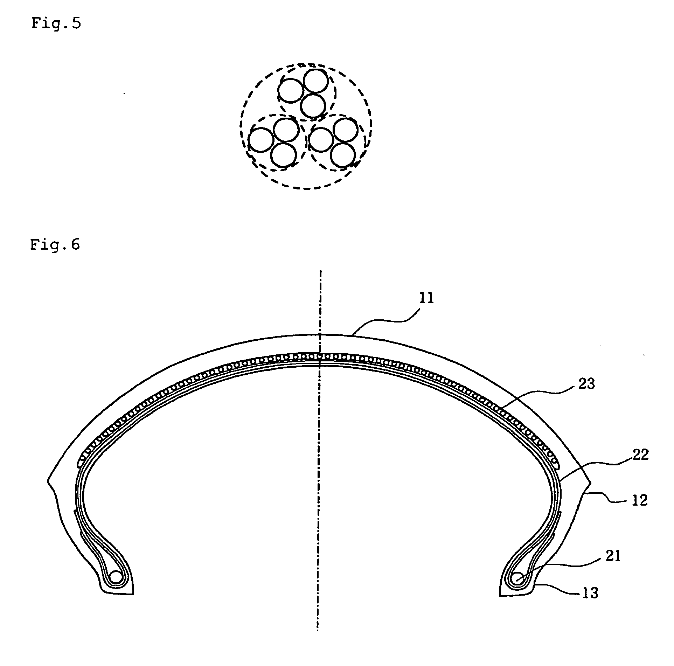

Fig. 6 is a schematic cross-sectional view showing one example of a motorcycle pneumatic radial tire of the present invention. As shown in the figure, the motorcycle tire of the present invention includes a tread portion 11, a pair of sidewall portions 12 provided from both edge portions thereof to the inside in the tire radius direction, and bead portions 13 ranging from the sidewall portions 12 to the inside in the tire radius direction, and in addition, the motorcycle tire also includes a carcass layer 22 which reinforces the above portions between bead cores 21 respectively embedded in the bead portions 13 and which is formed of at least one carcass ply composed of rubber and cords coated thereby, the cord being inclined by 60° to 90° with respect to the equatorial plane of the tire, and at least one layer of a spiral belt layer 23, which is provided outside the carcass layer 22 in the tire radius direction and which is formed by spirally winding substantially parallel to the equatorial plane of the tire.

In the motorcycle tire of the present invention, the spiral belt layer 23 described above is characterized by being formed using the rubber-steel cord composite of the present invention. As described above, the rubber-steel cord composite of the present invention includes rubber and at least one steel cord embedded therein, which is provided by bundling a plurality of the steel linear objects 1 subjected to spiral shape forming at substantially identical pitches in an approximately identical phase without twisting (Fig. 1), and in the motorcycle tire of the present invention, since the above rubber-steel cord composite is used, as is the case of a cord which is not embedded in rubber, even after vulcanization thereof, a spiral belt layer is realized which can maintain the initial elongation as that of a shaped spring and can also improve the strength.

In the motorcycle tire of the present invention, when the rubber-steel cord composite of the present invention is applied to the spiral belt layer of the tire, other tire structures, materials for individual constituent components, and the like are not particularly limited, and accordingly, a desired effect of the present invention can be obtained.

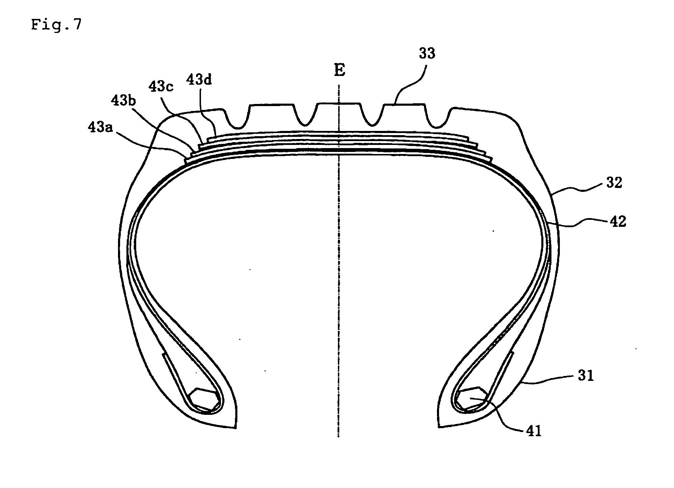

Fig. 7 is a schematic cross-sectional view showing one example of a large pneumatic radial tire of the present invention. As shown in the figure, the large tire of the present invention includes a carcass 42 formed of at least one ply and, in an example shown in the figure, formed of one ply of a rubber-coated radial array cord, which reinforces a pair of sidewall portions 32 and a tread portion 33 between bead cores 41 respectively embedded in pair of bead portions 31; and at least one layer and, in an example shown in the figure, four layers of belts 43a to 43d, provided at the outer circumference of the carcass 42 to reinforce the tread portion 33.

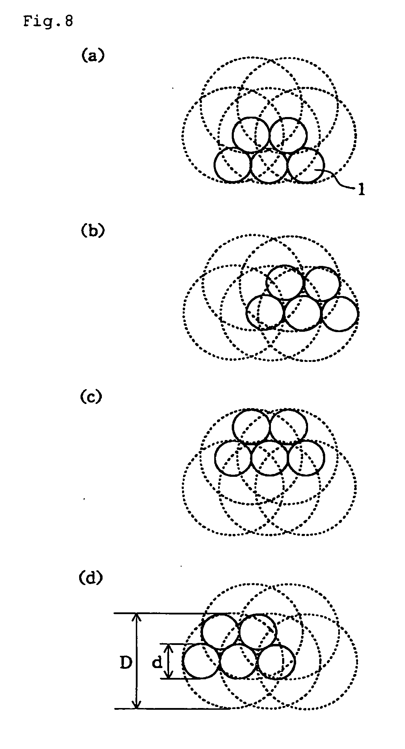

In the present invention, at least the outermost layer belt 43d among the above belts is characterized by being formed using the rubber-steel cord composite of the present invention. Fig. 8 includes schematic cross-sectional views showing a cord structure according to one example of the rubber-steel cord composite of the present invention. As shown in the figure, the cross-sectional shape of this rubber-steel cord composite is changed from (a) to (d) in that order in the longitudinal direction as shown in Fig. 8. That is, for example, a rubber-steel cord composite in which the number of the steel linear objects 1 is three is formed such that the steel linear objects 1 subjected to spiral shape forming at substantially identical pitches as shown in Fig. 9(a) are bundled together in an approximately identical phase without being twisted as shown in Fig. 9(b), followed by being embedded in rubber.

In the present invention, according to the structure described above, even after being embedded in rubber, a cord having significantly high elongation and very superior stretchable properties can be obtained, and since the cord as described above is applied to the outermost layer belt, a large tire can be obtained which has excellent durability and anti-cutting performance against external stretches. In the case described above, by controlling the amount of spiral shape forming, the elongation amount can be controlled, and in addition, by changing the number of the steel linear objects 1 to be bundled, the cord strength can be controlled.

In addition, also in this case, the following equation is preferably satisfied,

$$D > 2.5d$$

where the circumscribed circle diameter of the formed spiral shape of the steel linear object 1 and the outside diameter thereof are represented by D and d, respectively (see Fig. 1). When the diameter D of the circumscribed circle of the formed shape of the steel linear object 1 is 2.5 times smaller than the diameter d, sufficient elongation is not ensured, and during running on a bad road, the cord cannot withstand a large deformation generated when a tire rides over a large protrusion, rock, or the like, so that the cord may be broken in some cases.

Furthermore, in the case in which the rubber-steel cord composite of the present invention is applied to a large tire, the following equation is also preferably satisfied,

$$P < 17.5D - 8.0$$

where the shape forming pitch of the steel linear object 1 is represented by P, and the circumscribed diameter of the formed spiral shape thereof is represented by D. When the above equation is not satisfied, sufficient elongation is not ensured, and during running on a bad road, the cord cannot withstand a large deformation generated when a tire rides over a large protrusion, rock, or the like, so that the cord may be broken in some cases.

In the large tire of the present invention, when the rubber-steel cord composite of the present invention is applied to the outermost layer belt of the tire, other tire structures, materials for individual constituent components, and the like are not particularly limited, and accordingly, a desired effect of the present invention can be obtained.

In addition, in a motorcycle pneumatic radial tire according to another embodiment of the present invention, a rubber-steel cord composite, which shows low rigidity at the initial stage and rigidity at a predetermined load or more, is applied to the spiral belt layer 23 (Fig. 6). That is, in said another motorcycle tire of the present invention, it is important that the spiral belt layer 23 is formed using a rubber-steel cord composite in which a steel cord formed of a plurality of steel linear objects is embedded in rubber, and that the rubber-steel cord composite described above satisfies the following conditions.

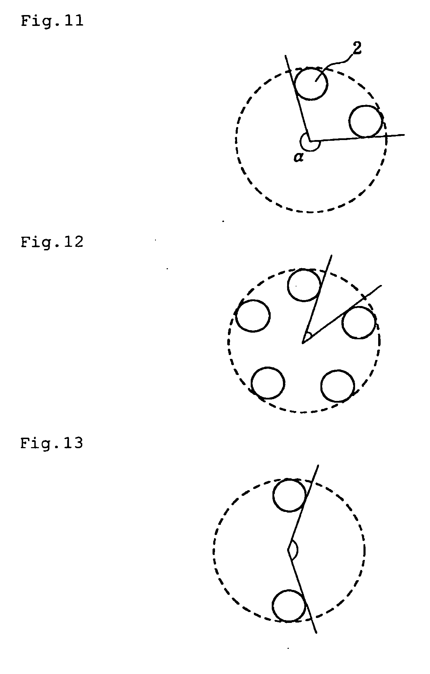

In addition, as another example of the rubber-steel cord composite having the above features according to the present invention, for example, a rubber-steel cord composite may be preferably mentioned in which a steel cord formed by twisting two to five steel linear objects subjected to excessive shape forming is embedded in rubber, the center angle of a circumscribed circle of the steel cord in a cross-section perpendicular to the longitudinal direction thereof being 180° or more with respect an arc between the steel linear objects. Fig. 11 shows one example of the rubber-steel cord composite described above. That is, when the arc between steel linear objects 2 is regarded as the gap therebetween, a rubber-steel cord composite having a large gap, that is, having a center angle (gap angle) $\alpha$ of 180° or more with respect to this arc, may be mentioned. Also in this case, the reason for this is that since rubber is not enclosed inside the cord and may escape therefrom, even after vulcanization, initial elongation similar to that of a shaped spring can be maintained as the case of a cord which is not embedded in rubber.

In addition, also in this case, the following equation is preferably satisfied as that described above,

$$D>2.5d$$

where the circumscribed circle diameter of the steel cord is represented by D, and the outside diameter of the steel linear object forming the steel cord is represented by d. Accordingly, the difference between the rigidity at the initial stage and that of a high rigidity portion obtained at a predetermined input force or more can be increased, and as a result, the features of the above rubber-steel cord composite can be further enhanced.

Also in the rubber-steel cord composite of said another embodiment according to the present invention, when the conditions relating to the above cord structure are satisfied, other than those described above, that is, the particular cord structure, the number, wire diameter, and particular structure of the steel linear objects, materials for steel and rubber, and the like are not specifically limited. In addition, the rubber-steel cord composite described above can be stably and efficiently formed by the manufacturing method described above.

In addition, also in the motorcycle tire of said another embodiment according to the present invention, when the rubber-steel cord composite which satisfies the above features is applied to the spiral belt layer of the tire, other tire structures, materials for individual constituent components, and the like are not particularly limited, and as a result, a desired effect of the present invention can be obtained.

Examples

Hereinafter, the present invention will be described in detail with reference to the examples.

<Example 1>

By using steel linear objects (filaments or strands (brass plating): 63 percent by weight of Cu and 37 percent by weight of Zn) subjected to shape forming, which had shape forming amounts and pitches shown in the following Table 1, rubber-steel cord composites were formed in accordance with the conditions shown in the following Table 1. As coating rubber, a rubber composition was used including 100 parts by weight of natural rubber (NR), 55 parts by weight of carbon black (HAF), 7 parts by weight of zinc oxide (ZnO), 5 parts by weight of sulfur, and 0.1 parts by weight of a Co salt (cobalt naphthenate).

The rubber-steel cord composites thus formed were each applied at an embedded number of 40 per 50 mm to a spiral belt layer of a motorcycle pneumatic radial tire (MC tire) (tire size: 190/50ZR17) having the spiral belt structure shown in Fig. 6, and the vibration absorption performance and the cornering performance were evaluated as described below. The results are also shown in the following Table 1.

Incidentally, the tire shown in the figure includes the tread portion 11, the pair of sidewall portions 12 provided from the both edge portions thereof to the inside in the tire radius direction, and the bead portions 13 ranging from the sidewall portions 12 to the inside in the tire radius direction, in addition, the carcass layer 22, which reinforces the above portions between the bead cores 21 embedded in the beads portions 13, and the spiral belt layer 23, which is provided on a crown portion located outside the carcass layer 22 in the tire radius direction and which is formed by spirally winding substantially parallel to the equation plane of the tire, are also included. In more particular, this spiral belt layer is formed by spirally winding a belt-shaped member composed of two parallel cords embedded in coating rubber substantially parallel at an angle approximately in the direction toward the equatorial plane of the tire, and the cords are disposed parallel in the tire width direction along the arc of the carcass.

<MC Tire Vibration Absorption Performance and Cornering Performance>

The test tires were mounted to a sport type 100-cc motorcycle with a rim having a rim size of MT6.00×17 at a pneumatic pressure of 250 kPa, and the motorcycle was actually driven on a test course. The vibration absorption performance during straight running and the cornering performance during turning were each evaluated by driver's feeling based on a 10-point method. In both evaluations, point 8 or more is regarded as an acceptable level.

[Table 1]

| Cord Structure | Comparative Example 1-1 | Comparative Example 1-2 | Comparative Example 1-3 | Comparative Example 1-4 | Example 1-1 |
|---|---|---|---|---|---|
| | Open[1] | Close | Open | Multi-twisted | Non-twisted |
| | 1×5×0.21 | 1×5×0.21 | 1×2×0.21 | 3×3×0.20 | 0.2.×5 bundle |
| Cord Portion Cross-Sectional View | Fig. 2 | Fig. 3 | Fig. 4 | Fig. 5 | Fig. 1 |
| Shape Forming Amount (mm) | 0.83 | – | 0.83 | – | 0.83 |
| Shape Forming Pitch (mm) | 9 | 9 | 9 | – | 9 |
| Element Wire (Strand) Diameter d (mm) | 0.21 | 0.21 | $2\underline{1}$ $0.2\underline{1}$ | 0.45 | 0.21 |
| Diameter D of Circumscribed Circle of Shape Formed Element Wire (Strand) (mm) | 0.83 | 0.61 | 0.83 | 0.91 | 0.83 |
| 1,500S-1,600S Elongation Amount (%)[2] | 0.058 | 0.054 | 0.054 | 0.072 | 0.058 |
| Elongation at Application Load of 1,500S | 1.099 | – | 1.277 | 1.855 | 2.303 |
| Elongation at Application Load of 1,600S | 1.157 | – | 1.331 | 1.927 | 2.361 |
| $(W_2-W_1)/S$[3] | 131.3 | 188.0 | 65.2 | 13.8 | 14.6 |
| $W_1/S$ | 314.2 | – | 128.6 | 43.5 | 41.2 |
| $W_2/S$ | 445.4 | – | 193.7 | 57.3 | 55.8 |
| Vibration Absorption Performance | 6 | 5 | 7 | 9 | 9 |
| Cornering Performance | 9 | 8 | 10 | 6 | 10 |

EP 1 983 098 B1

\*1) Structure in which spaces are present between filaments forming a cord.

\*2) Elongation amount obtained when the application load W to the rubber-steel cord composite is changed from $1,500 \times S(N)$ to $1,600 \times S(N)$. S indicates the steel portion cross-sectional area ($mm^2$) of the steel cord and is the sum ($S = \Sigma s_n$) of cross-sectional areas ($mm^2$) $s_1$, $s_2$, $\cdots$ $s_n$ of all the steel filaments forming the steel cord.

\*3) $W_1$ indicates the application load (N) when the rubber-steel cord composite is elongated by 0.35%, and $W_2$ indicates the application load (N) when it is elongated by 0.45%.

As appeared from the results shown in the above Table 1, it was confirmed that when the rubber-steel cord composite of Example 1-1 was applied to the tire in which a steel cord obtained by bundling steel linear objects subjected to spiral shape forming at identical pitches in an approximately identical phase, without twisting, was used, as for both the vibration absorption performance and the cornering performance, excellent results could be obtained.

<Example 2>

By using steel linear objects (filaments or strands (brass plating): 63 percent by weight of Cu and 37 percent by weight of Zn) subjected to shape forming, which had shape forming amounts and pitches shown in the following Table 2, rubber-steel cord composites were formed in accordance with the conditions shown in the following Table 2. As coating rubber, a rubber composition similar to that used in Example 1 was used.

The rubber-steel cord composites thus formed were each applied at an embedded number of 40 per 50 mm to a spiral belt layer of a motorcycle pneumatic radial tire (MC tire) (tire size: 190/50ZR17) having the spiral belt structure shown in Fig. 6, and the vibration absorption performance and the cornering performance were evaluated in a manner similar to that in Example 1. The results are also shown in the following Table 2.

[Table 2]

| | Comparative Example 2-1 | Comparative Example 2-2 | Comparative Example 2-3 | Comparative Example 2-4 | Example 2-1 |
|---|---|---|---|---|---|
| Cord Structure | Open*1 | Close | Open | Multi-twisted | Non-twisted |
| | 1×5×0.21 | 1×5×0.21 | 1×2×0.21 | 3×3×0.20 | 0.21×5 bundle |
| Cord Portion Cross-Sectional View | Fig. 2 | Fig. 3 | Fig. 4 | Fig. 5 | Fig. 1 |
| Shape Forming Amount (mm) | 0.83 | - | 0.83 | - | 0.83 |
| Shape Forming Pitch (mm) | 9 | 9 | 9 | - | 9 |
| Element Wire (Strand) Diameter d (mm) | 0.21 | 0.21 | 0.21 | 0.45 | 0.21 |
| Diameter D of Circumscribed Circle of Shape Formed Element Wire (Strand) (mm) | 0.83 | 0.61 | 0.83 | 0.91 | 0.83 |
| 1,500S-1,600S Elongation Amount (%)*2 | 0.058 | 0.054 | 0.054 | 0.072 | 0.058 |
| Elongation at Application Load of 1,500S | 1.099 | - | 1.277 | 1.855 | 2.303 |
| Elongation at Application Load of 1,600S | 1.157 | - | 1.331 | 1.927 | 2.361 |
| $(W_2-W_1)/S$*3 | 131.3 | 188.0 | 65.2 | 13.8 | 14.6 |
| $W_1/S$ | 314.2 | - | 128.6 | 43.5 | 41.2 |
| $W_2/S$ | 445.4 | - | 193.7 | 57.3 | 55.8 |
| Vibration Absorption Performance of MC Tire | 6 | 5 | 7 | 9 | 9 |
| Cornering Performance of MC Tire | 9 | 8 | 10 | 6 | 10 |

*1) to *3) Similar to those described above.

As appeared from the results shown in the above Table 2, in the motorcycle tire of Example 2-1 using the rubber-steel cord composite in which a steel cord obtained by bundling steel linear objects subjected to spiral shape forming at identical pitches in an approximately identical phase, without twisting, was coated by the rubber, it was confirmed that the cornering performance could be improved without degrading the vibration absorption performance.

<Example 3>

By using steel filaments (brass plating): 63 percent by weight of Cu and 37 percent by weight of Zn), rubber-steel cord composites of examples and comparative examples were formed in accordance with the conditions shown in the following Table 3. As coating rubber, a rubber composition similar to that used in Example 1 was used. In addition, the cord of each example was a non-twisted cord in which a plurality of steel filaments subjected to spiral shape forming at substantially identical pitches was bundled in an approximately identical phase without being twisted.

The rubber-steel cord composites thus obtained were each applied to the outermost layer 43d of the four layers of belts of a truck/bus pneumatic radial tire of a tire size 11R22.5 having the tire structure shown in Fig. 7, so that individual test tires were formed. After the test tires thus formed were made to run 100,000 km on a road surface having a bad road rate of 20% at an inside pressure of 830 kPa and a load of 100%, in accordance with the following, anti-separation performance and anti-cutting performance of the outermost layer belt 43d were evaluated.

<Anti-Separation Performance>

As for the anti-separation performance, a separation length was measured from a place of the cord of the outermost layer belt at which cutting occurred. The results are shown by the index relative to the value of Conventional Example 3-1, which was regarded as 100. As the value decreases, the result becomes better.

<Anti-Cutting Performance>

As for the anti-cutting performance, after the tread was peeled off, the number of cuts of the entire circumferences of the four belts was counted. The results are shown by the index relative to the value of Conventional Example 3-1, which was regarded as 100. A lower value indicates a smaller number of cuts and a better result.

[Table 3]

| | Example 3-1 | Comparative Example 3-1 | Comparative Example 3-2 | Conventional Example 3-1 | Conventional Example 3-2 |
|---|---|---|---|---|---|
| Cord Structure | 0.35 spiral 5 filaments bundle | 0.35 spiral 5 filaments bundle | 0.35 spiral 5 filaments bundle | 3×0.20+6×0.36 | 4×4×0.22 |
| Cord Productivity (Index) | 70 | 70 | 70 | 100 | 150 |
| Diameter D of Shape Formed Circumscribed Circle (mm) | 1.05 | 0.7 | 1.05 | - | - |
| Shape Forming Pitch P (mm) | 8 | 4 | 15 | - | - |
| Separation Length (Index) | 20 | 25 | 30 | 100 | 90 |
| Number of Cuts (Index) | 60 | 90 | 90 | 100 | 60 |

As appeared from the results shown in the above Table 3, in the tire of Example 3-1 using the rubber-steel cord composite in which a steel cord obtained by bundling steel linear objects subjected to spiral shape forming at identical pitches in an approximately identical phase, without twisting, was coated by the rubber, it was confirmed that compared to the tires of the conventional examples and the comparative examples, the anti-cutting performance against external scratches was superior, and that compared to the comparative example in which the multi-twisted structure was used, superior productivity was obtained.

<Example 4>

By using steel linear objects (filaments or strands (brass plating): 63 percent by weight of Cu and 37 percent by weight of Zn) subjected to shape forming, which had shape forming amounts and pitches shown in the following Table 4, rubber-steel cord composites were formed in accordance with the conditions shown in the following Table 4. As coating rubber, a rubber composition similar to that used in Example 1 was used.

The rubber-steel cord composites thus formed were each applied at an embedded number of 40 per 50 mm to a spiral belt layer of a motorcycle pneumatic radial tire (MC tire) (tire size: 190/50ZR17) having the spiral belt structure shown in Fig. 6, and the vibration absorption performance, the nimble performance, and the cornering performance were evaluated in a manner as described below. The results are also shown in the following Table 4.

<Vibration Absorption Performance, Nimble Performance, and Cornering Performance>

The test tires were mounted to a sport type 100-cc motorcycle with a rim having a rim size of MT6.00×17 at a pneumatic pressure of 250 kPa, and the motorcycle was actually driven on a test course. The vibration absorption performance, the nimble performance, which were obtained during straight running, and the cornering performance during turning running were each evaluated by driver's feeling based on a 10-point method. In the individual performances described above, point 8 or more is regarded as an acceptable level.

[Table 4]

| | Comparative Example 4-1 | Comparative Example 4-2 | Comparative Example 4-3 | Example 4-1 | Example 4-2 |
|---|---|---|---|---|---|
| Cord Structure | Open*[1] | Open | Multi-twisted | Multi-twisted | Open |
| | 1×5×0.21 | 1×2×0.21 | 3×3×0.20 | 0.21×5 bundle | 1×2×0.21 |
| Cord Portion Cross-Sectional View | Fig. 12 | Fig. 13 | Fig. 5 | Fig. 1 | Fig. 11 |
| Shape Forming Amount (mm) | 0.83 | 0.83 | - | 0.83 | 0.83 |
| Shape Forming Pitch (mm) | 9 | 9 | - | 9 | 9 |
| Element Wire (Strand) Diameter d (mm) | 0.21 | 0.21 | - | 0.21 | 0.21 |
| Steel Portion Cross-sectional Area $S^{*4}$ (mm$^2$) | 0.173180295 | 0.069272118 | 0.282743339 | 0.173180295 | 0.069272118 |
| Diameter D of Circumscribed circle of Shape Formed Element Wire (Strand) (mm) | 0.83 | 0.83 | 0.91 | 0.83 | 0.83 |
| Gap Angle (°) | 33 | 142 | - | - | 272 |
| 1,500S-1,600S Elongation Amount (%) *[5] | 0.058 | 0.054 | 0.072 | 0.058 | 0.055 |
| Elongation at Application Load of 1,500S (%) | 1.099 | 1.277 | 1.855 | 2.303 | 1.626 |
| Elongation at Application Load of 1,600S (%) | 1.157 | 1.331 | 1.927 | 2.361 | 1.681 |
| $(W_2-W_1)/S$ *[3] | 131.3 | 65.2 | 13.8 | 14.6 | 27.2 |
| $W_1/S$ | 314.2 | 128.6 | 43.5 | 41.2 | 70.6 |
| $W_2/S$ | 445.4 | 193.7 | 57.3 | 55.8 | 97.8 |
| Vibration Absorption Performance | 6 | 6 | 9 | 9 | 8 |
| Nimble Performance | 6 | 6 | 8 | 10 | 9 |
| Limit Cornering Performance | 9 | 9 | 6 | 10 | 10 |

EP 1 983 098 B1

```
*1) and *3) Similar to those described above.

*4) (S=Σsₙ) indicates the total cross-sectional areas s₁, s₂,

··· sₙ (mm²) of all the steel filaments forming the steel

cord.

*5) Elongation amount obtained when the application load W

to the rubber-steel cord composite is changed from

1,500×S(N) to 1,600×S(N).
```

As appeared from the results shown in the above Table 4, in the motorcycle tire of Examples 4-1 and 4-2 using the rubber-steel cord composite which satisfied the predetermined features of the present invention, it was confirmed that the cornering performance could be improved without degrading the vibration absorption performance and the nimble performance.

**Claims**

1. A rubber-steel cord composite comprising: at least one steel cord provided by bundling a plurality of steel linear objects (1) subjected to shape forming at substantially identical pitches in an approximately identical phase without twisting, the steel cord being embedded in rubber, the steel linear objects (1) being in contact with each other, **characterized in that** the shape forming is spiral shape forming, and a circumscribed circle of a formed spiral shape of any one of the steel linear objects (1) and a circumscribed circle of a formed spiral shape of at least one of the other steel linear objects (1) are overlapped with each other, and **characterized in that** the following equation is satisfied

$$D > 2.5d$$

where D indicates the diameter of a circumscribed circle of the formed spiral shape of the steel linear object (1), and d indicates the outer diameter of the steel linear objects (1).

2. The rubber-steel cord composite according to claim 1, wherein the structures and the shape forming amounts of the steel linear objects (1) are all identical to each other.

3. The rubber-steel cord composite according to one of claims 1 or 2, wherein the steel linear objects (1) comprise steel filaments each having an approximately circular cross-section.

4. The rubber-steel cord composite according to one of claims 1 or 2, wherein the steel linear objects (1) comprise steel strands provided by twisting steel filaments.

5. The rubber-steel cord composite according to one of claims 1 to 4, wherein, in strain-load characteristics in the state in which the rubber adheres the inside of a circumscribed circle of the steel cord, the elongation amount obtained by changing an application load W from 1.500xS (N) to 1,600xS (N) is 0.070% or less, where S (mm²) indicates a steel portion cross-sectional area of the steel cord, and an application load $W_1$ (N) at an elongation of 0.35% and an application load $W_2$ (N) at an elongation of 0.45% satisfy the following equation

$$W_2 - W_1 < K_1.S,$$

where $K_1 = 35$ N/mm².

6. The rubber-steel cord composite according to claim 5, wherein, in the strain-load characteristics in the state in which the rubber adheres the inside of a circumscribed circle of the steel cord, the elongation amount is 0.065% or less when the application load W is changed from 1,500xS (N) to 1,600xS (N).

7. The rubber-steel cord composite according to claims 5 or 6 wherein, in the strain-load characteristics in the state in which the rubber adheres the inside of a circumscribed circle of the steel cord, the application load $W_1$ (N) at an elongation of 0.35% and the application load $W_2$ (N) at an elongation of 0.45% satisfy the following equation

$$W_2-W_1<K_2.S = 20 \text{ N mm}^2.$$

8. A motorcycle pneumatic radial tire comprising: a tread portion (11); a pair of sidewall portions (12) provided from both edge portions of the tread portion (11) to the inside in a tire radius direction; and bead portions (13) ranging from the sidewall portion (12) to the inside in the tire radius direction, in which a carcass layer (22), which reinforces these portions between bead cores (21) embedded in the respective bead portions (13) and which is formed of at least one carcass ply composed of rubber and cords coated thereby inclined by 60° to 90° with respect to the equatorial plane of the tire, and a spiral belt layer (23) including at least one layer, which is provided outside the carcass layer (22) in the tire radius direction and which is formed by spirally winding substantially parallel to the equatorial plane of the tire, are included,
wherein the spiral belt layer (23) comprises the rubber-steel cord composite according to one of claims 1 to 17.

9. A pneumatic radial tire for a truck or bus, comprising: a carcass (42) including at least one ply of a rubber-coated radial array cord, which reinforces a pair of sidewall portions (32) and a tread portion (33) between bead cores (41) embedded respectively in a pair of bead portions (31); and a belt including at least one layer (43a-43d) which reinforces the tread portion (33) along the outer circumference of the carcass (42),
wherein at least outermost layer (43d) of the belt comprises the rubber-steel cord composite according to one of claims 1 to 4.

10. The pneumatic radial tire according to claim 9, wherein the following equation is satisfied

$$P<17.5D-8.0$$

wherein P and D indicates the shape forming pitch and the diameter of a circumscribed circle of the formed spiral shape of the steel linear objects (1), respectively.

**Patentansprüche**

1. Gummi-Stahlkord-Verbund, der Folgendes umfasst: wenigstens einen Stahlkord, der bereitgestellt wird durch das Bündeln von mehreren linearen Stahlgegenständen (1), die einer Gestaltformung mit im Wesentlichen identischen Teilungen in einer annähernd identischen Phase ohne Verdrillen unterworfen werden, wobei der Stahlkord in Gummi eingebettet ist, wobei sich die linearen Stahlgegenstände (1) in Berührung miteinander befinden, **dadurch gekennzeichnet, dass** die Gestaltformung eine spiralige Gestaltformung ist und ein umbeschriebener Kreis einer geformten Spiralgestalt von einem der linearen Stahlgegenstände (1) und ein umbeschriebener Kreis einer geformten Spiralgestalt von wenigstens einem der anderen linearen Stahlgegenstände (1) miteinander überlappt sind, und **dadurch gekennzeichnet, dass** die folgende Gleichung erfüllt ist:

$$D>2,5d,$$

wobei D den Durchmesser und eines umbeschriebenen Kreises der geformten Spiralgestalt des linearen Stahlgegenstandes (1) bezeichnet und d den Außendurchmesser der linearen Stahlgegenstände (1) bezeichnet.

2. Gummi-Stahlkord-Verbund nach Anspruch 1, wobei die Struktur und die Gestaltformungsausmaße der linearen Stahlgegenstände (1) alle zueinander identisch sind.

3. Gummi-Stahlkord-Verbund nach einem der Ansprüche 1 oder 2, wobei die linearen Stahlgegenstände (1) Stahlfasern umfassen, die jeweils einen annähernd kreisförmigen Querschnitt haben.

4. Gummi-Stahlkord-Verbund nach einem der Ansprüche 1 oder 2, wobei die linearen Stahlgegenstände (1) Stahlstränge umfassen, die durch das Verdrillen von Stahlfasern bereitgestellt werden.

5. Gummi-Stahlkord-Verbund nach einem der Ansprüche 1 bis 4, wobei bei den Verformung-Belastung-Charakteristika in dem Zustand, in dem der Gummi an der Innenseite eines umbeschriebenen Kreises des Stahlkords haftet, das durch die Veränderung einer Anwendungsbelastung W von 1500xS (N) auf 1600xS (N) erlangte Dehnungsausmaß 0,070 % oder weniger beträgt, wobei S ($mm^2$) eine Querschnittsfläche des Stahlabschnitts des Stahlkords bezeichnet, und eine Anwendungsbelastung $W_1$ (N) bei einer Dehnung von 0,35 % und eine Anwendungsbelastung $W_2$ (N) bei einer Dehnung von 0,45 % die folgende Gleichung erfüllen:

$$W_2 - W_1 < K_1.S,$$

wobei $K_1 = 35$ N/$mm^2$.

6. Gummi-Stahlkord-Verbund nach Anspruch 5, wobei bei den Verformung-Belastung-Charakteristika in dem Zustand, in dem der Gummi an der Innenseite eines umbeschriebenen Kreises des Stahlkords haftet, das Dehnungsausmaß 0,065 % oder weniger beträgt, wenn die Anwendungsbelastung W von 1500xS (N) auf 1600xS (N) verändert wird.

7. Gummi-Stahlkord-Verbund nach Anspruch 5 oder 6, wobei bei den Verformung-Belastung-Charakteristika in dem Zustand, in dem der Gummi an der Innenseite eines umbeschriebenen Kreises des Stahlkords haftet, die Anwendungsbelastung $W_1$ (N) bei einer Dehnung von 0,35 % und die Anwendungsbelastung $W_2$ (N) bei einer Dehnung von 0,45 % die folgende Gleichung erfüllen:

$$W_2 - W_1 < K_2.S = 20 \text{ N/mm}^2$$

8. Motorrad-Radialluftreifen, der Folgendes umfasst: einen Laufflächenabschnitt (11), ein Paar von Seitenwandabschnitten (12), die von beiden Kantenabschnitten des Laufflächenabschnitts (11) bis zu der Innenseite in einer Reifenradiusrichtung bereitgestellt werden, und Wulstabschnitte (13), die von dem Seitenwandabschnitt (12) bis zu der Innenseite in der Reifenradiusrichtung reichen, wobei eine Karkassenlage (22), die diese Abschnitte zwischen in den jeweiligen Wulstabschnitten (13) eingebetteten Wulstkernen (21) verstärkt und die aus wenigstens einer Karkassenschicht geformt ist, die aus Gummi und durch denselben überzogenen Kords, die um 60° bis 90° in Bezug auf die Äquatorialebene des Reifens geneigt sind, besteht, und eine Spiralgürtellage (23), die wenigstens eine Lage einschließt, die außerhalb der Karkassenlage (22) in der Reifenradiusrichtung bereitgestellt wird und die durch das spiralförmige Wickeln im Wesentlichen parallel zu der Äquatorialebene des Reifens geformt ist, eingeschlossen sind, wobei die Spiralgürtellage (23) den Gummi-Stahlkord-Verbund nach einem der Ansprüche 1 bis 7 umfasst.

9. Radialluftreifen für einen Lastkraftwagen oder Bus, wobei der Reifen Folgendes umfasst: eine Karkasse (42), die wenigstens eine Schicht aus einem gummiüberzogenen radialangeordneten Kord einschließt, die ein Paar von Seitenwandabschnitten (32) und einen Laufflächenabschnitt (33) zwischen jeweils in ein Paar von Wulstabschnitten (31) eingebetteten Wulstkernen (41) verstärkt, und einen Gürtel der wenigstens eine Lage (43a-43d) einschließt, der den Laufflächenabschnitt (33) entlang des Außenumfangs der Karkasse (42) verstärkt, wobei wenigstens die äußerste Lage (43d) des Gürtels den Gummi-Stahlkord-Verbund nach einem der Ansprüche 1 bis 4 umfasst.

10. Radialluftreifen nach Anspruch 9, wobei die folgende Gleichung erfüllt ist:

$$P < 17,5D - 8,0,$$

wobei P und D die Gestaltformungsteilung bzw. den Durchmesser eines umbeschriebenen Kreises der geformten Spiralgestalt der linearen Stahlgegenstände (1) bezeichnen.

**Revendications**

1. Câblé composite en acier-caoutchouc, comprenant: au moins un câblé d'acier produit par regroupement de plusieurs objets linéaires en acier (1), soumis à un formage de forme à des pas pratiquement identiques dans une phase approximativement identique, sans torsion, le câblé d'acier étant noyé dans du caoutchouc, les objets linéaires en acier (1) étant en contact les uns avec les autres, **caractérisé en ce que** le formage de forme est un formage en une forme en spirale, un cercle circonscrit d'une forme en spirale formée d'un quelconque des objets linéaires en acier (1) et un cercle circonscrit d'une forme en spirale formée d'au moins un des autres objets linéaires en acier (1) se chevauchant mutuellement, et **caractérisé en ce que** l'équation ci-dessous est satisfaite

$$D > 2{,}5d$$

dans laquelle D indique le diamètre d'un cercle circonscrit de la forme en spirale formée de l'objet linéaire en acier (1), d indiquant le diamètre extérieur des objets linéaires en acier (1).

2. Câblé composite en acier-caoutchouc selon la revendication 1, dans lequel les structures et les quantités de formage de forme des objets linéaires en acier (1) sont toutes identiques les unes aux autres.

3. Câblé composite en acier-caoutchouc selon l'une des revendications 1 ou 2, dans lequel les objets linéaires en acier (1) comprennent des filaments d'acier ayant chacun une section transversale approximativement circulaire.

4. Câblé composite en acier-caoutchouc selon l'une des revendications 1 ou 2, dans lequel les objets linéaires en acier (1) comprennent des torons en acier produits par torsion des filaments d'acier.

5. Câblé composite en acier-caoutchouc selon l'une des revendications 1 à 4, dans lequel, en ce qui concerne les caractéristiques de charge de contrainte, dans l'état dans lequel le caoutchouc adhère à l'intérieur d'un cercle circonscrit du câblé d'acier, la valeur d'allongement entraînée en changeant une charge d'application W de 1,500 x S (N) à 1,600 x S (N) représente 0,070% ou moins, S ($mm^2$) indiquant une surface de section transversale d'une partie d'acier du câblé d'acier, une charge d'application $W_1$ (N) en présence d'un allongement de 0,35% et une charge d'application $W_2$ (N) en présence d'un allongement de 0,45% satisfaisant l'équation ci-dessous

$$W_2 - W_1 < K_1 - S,$$

dans laquelle $K_1$ = 35 $N/mm^2$.

6. Câblé composite en acier-caoutchouc selon la revendication 5, dans lequel, en ce qui concerne les caractéristiques de charge de contrainte dans l'état dans lequel le caoutchouc adhère à l'intérieur d'un cercle circonscrit du câblé d'acier, la valeur d'allongement représente 0,065% ou moins lorsque la charge d'application W est changée de 1.500 x S (N) à 1.600 x S (N).

7. Câblé composite en acier-caoutchouc selon les revendications 5 ou 6, dans lequel, en ce qui concerne les caractéristiques de charge de contrainte dans l'état dans lequel le caoutchouc adhère à l'intérieur d'un cercle circonscrit du câblé d'acier, la charge d'application $W_1$ (N) en présence d'un allongement de 0,35% et la charge d'application $W_2$ (N) en présence d'un allongement de 0,45% satisfont l'équation ci-dessous

$$W_2 - W_1 < K_2 \cdot S = 20 \ N/mm^2.$$

8. Bandage pneumatique radial pour un motocycle, comprenant : une partie de bande de roulement (11) ; une paire de parties de flanc (12) agencées des deux parties de bordure de la partie de bande de roulement (11) vers l'intérieur dans une direciton radiale du bandage pneumatique ; et des parties de talon (13), s'étendant de la partie de flanc (12) vers l'intérieur dans la direciton radiale du bandage pneumatique, englobant une couche de carcasse (22), renforçant ces parties entre des tringles (21) noyées dans les parties de talon respectives (13), et comprenant au moins une nappe de carcasse composée de caoutchouc et des câblés qui en sont revêtus , inclinés de 60° à 90° par rapport au plan équatorial du bandage pneumatique, et une couche de ceinture en spirale (23), englobant au moins une couche, agencée à l'extérieur de la couche de carcasse (22) dans la direciton radiale du bandage pneumatique, et formée par enroulement en spirale, de manière pratiquement parallèle au plan équatorial du bandage pneumatique ;

dans lequel la couche de ceinture en spirale (23) comprend le câblé composite en acier-caoutchouc selon l'une des revendications 1 à 7.

9. Bandage pneumatique radial pour camion ou bus, comprenant : une carcasse (42) englobant au moins une nappe d'un câblé revêtu de caoutchouc, à agencement radial, renforçant une paire de parties de flanc (32) et une partie de bande de roulement (33) entre des tringles (41) noyées respectivement dans une paire de parties de talon (31) ; et une ceinture englobant au moins une couche (43a-43d) renforçant la partie de bande de roulement (33) le long de la circonférence externe de la carcasse (42) ;

dans lequel au moins la couche externe extrême (43d) de la ceinture comprend le câblé composite en acier-caoutchouc selon l'une des revendications 1 à 4.

10. Bandage pneumatique radial selon la revendication 9, dans lequel l'équation ci-dessous est satisfaite :

$$P < 17{,}5D - 8{,}0$$

dans laquelle P et D indiquent respectivement le pas de formage de forme et le diamètre d'un cercle circonscrit de la forme en spirale formée des objets linéaires en acier (1).

Fig.1

Fig.2

Fig.3

Fig.4

Fig.5

Fig.6

Fig.7

Fig.8

(a)

(b)

(c)

(d)

Fig.9

(a)

1

(b)

Fig.10

LOAD (N)

ELONGATION (%)

Fig.11

Fig.12

Fig.13

**EP 1 983 098 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9013288 A
- JP 4362402 A
- JP 2001130218 A
- JP 2002019413 A
- JP 9226318 A
- JP 200006464 B
- JP 20011130214 B